# FASCICULE DE BREVET EUROPEEN

(11) **EP 3 178 594 B1**
(45) Date de publication et mention de la délivrance du brevet: **13.06.2018**
(21) Numéro de dépôt: 16203078.7
(22) Date de dépôt: 09.12.2016
(51) Int. Cl.: B23G 5/04, B23G 1/46

(54) **FILIÈRE ET PROCÉDÉ POUR RÉALISER UN FILETAGE SUR UN TUBE**
GEWINDESCHNEIDER UND VERFAHREN ZUR HERSTELLUNG EINES GEWINDES AUF EINEM ROHR
TOOL AND METHOD FOR MAKING A THREAD ON A TUBE

(30) Priorité: 11.12.2015 FR 1562234
(43) Date de publication de la demande: 14.06.2017
(73) Titulaire: Virax, 51200 Epernay (FR)
(72) Inventeur: DA ROCHA, Franck, 51500 Puisieulx (FR); LHERMITTE, Vincent, 51530 Magenta (FR)
(74) Mandataire: Lavoix

(56) Documents cités:
- EP-A1- 1 655 090
- DE-B3-102011 013 789
- DE-U1-202012 103 423
- FR-A- 990 431
- FR-A- 1 384 071
- US-A- 2 174 467
- US-A1- 2004 134 051
- US-A1- 2015 086 287

## Description

La présente invention concerne une filière pour réaliser un filetage sur un tube par un déplacement hélicoïdal de la filière par rapport au tube autour d'un axe, la filière comprenant :
- une tête, et
- une pluralité de peignes, chaque peigne possédant une surface dentée propre à mordre dans le tube et étant monté de manière amovible sur la tête dans une position d'usage fixe par rapport à la tête.

L'invention concerne également un procédé correspondant.

Le filetage de tube est un type de raccordement qui a pour but de raccorder des tubes entre eux afin de permettre la circulation d'un fluide, par exemple un gaz, de l'eau, de l'air comprimé, etc..., ou d'assembler un tube avec un appareil à l'aide d'un raccord vissé. Le raccordement est étanche, démontable et résistant aux températures élevées, ainsi qu'à la corrosion éventuelle due aux fluides transportés.

Les filières sont des outils manuels ou des machines électriques qui servent à réaliser des filetages aux extrémités des tubes afin de les assembler à l'aide de raccords taraudés. Il est connu de recourir à une filière manuelle ou électroportative à têtes interchangeables. Une telle filière ne nécessite aucun réglage particulier, la tête étant choisie en fonction du diamètre du tube à fileter. Le filetage est avantageusement réalisé en un seul passage.

Une tête de filière se compose en général principalement d'un corps, de peignes comportant des dents propres à créer des sillons dans le tube, et une calotte adaptée pour être fixée sur le corps et immobiliser les peignes par rapport à la tête.

Les peignes sont différents les uns des autres pour tenir compte du décalage angulaire qui existe entre eux par rapport à l'axe du tube. Les profils de denture de chaque peigne sont différents. Les peignes sont identifiés, par exemple par un numéro gravé à leur surface, et ont un positionnement spécifique sur la tête. Dit autrement, chaque peigne possède sur la tête un emplacement qui lui est propre.

Un but de l'invention est d'obtenir une filière possédant des performances équivalentes pour un coût de fabrication inférieur.

A cet effet, l'invention a pour objet une filière selon la revendication 1.

Selon des modes particuliers de réalisation, la filière comprend l'une ou plusieurs des caractéristiques correspondant aux revendications dépendantes 2 à 8, prise(s) isolément ou selon toutes les combinaisons techniquement possibles.

L'invention a aussi pour objet un procédé de réalisation d'un filetage selon la revendication 9.

Selon un mode particulier de réalisation, le procédé comprend la caractéristique correspondant à la revendication dépendante 10.

L'invention a enfin pour objet un procédé de fabrication d'une filière selon la revendication 11.

L'invention sera mieux comprise à la lecture de la description qui va suivre, donnée uniquement à titre d'exemple, et faite en se référant aux dessins annexés, sur lesquels :
- la figure 1 est une vue en perspective d'une filière selon un premier mode de réalisation de l'invention,
- la figure 2 est une vue schématique d'un tube fileté à l'aide de la filière représentée sur la figure 1,
- figure 3 est une vue en perspective du corps de la tête de la filière représentée sur la figure 1,
- la figure 4 est une vue de face (dans le sens axial) du corps représenté sur la figure 3,
- les figures 5 et 6 sont des vues de profil, en coupe du corps représenté sur les figures 3 et 4 selon deux plans perpendiculaires passant par l'axe de la filière,
- la figure 7 est une vue en perspective d'un des peignes de la filière représentée sur la figure 1,
- la figure 8 est une vue schématique en perspective de la tête et des peignes d'une filière selon un deuxième mode de réalisation de l'invention,
- la figure 9 est une autre vue schématique en perspective du corps représenté sur la figure 8, et
- la figure 10 est une vue schématique en perspective d'un des peignes représentés sur la figure 8.

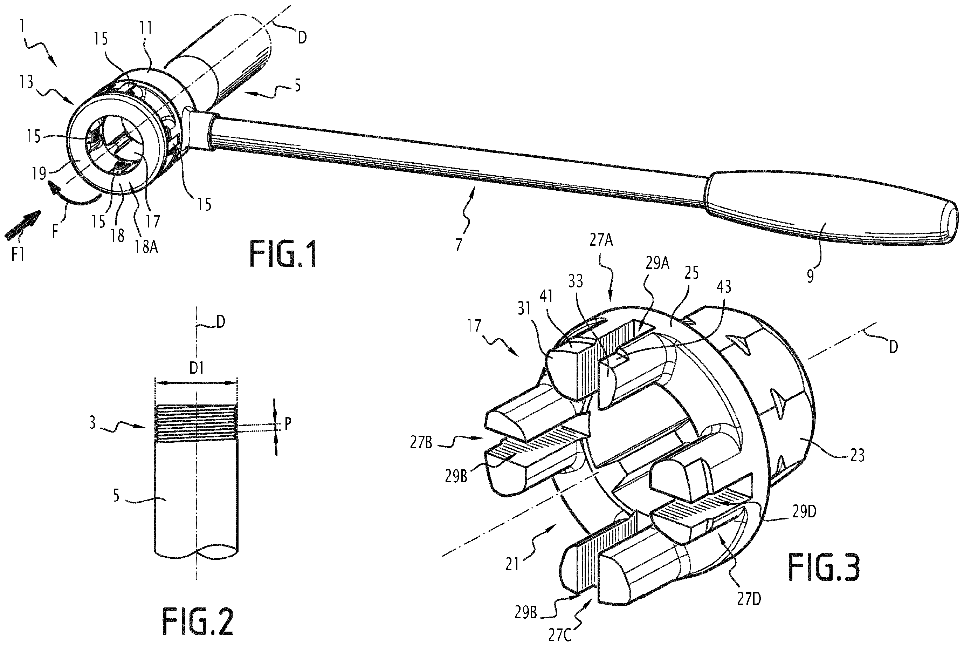

En référence à la figure 1, on décrit une filière 1 selon un premier mode de réalisation de l'invention. La filière 1 est adaptée pour réaliser un filetage 3 ayant un pas de filetage P sur un tube 5 représenté sur la figure 2, par un déplacement hélicoïdal de la filière par rapport au tube autour d'un axe D selon la flèche F de la figure 1.

Le tube 5 est par exemple en tube en métal. Le tube 5 possède un diamètre D1.

L'axe D est également sensiblement l'axe du tube 5.

La filière 1 comprend un manche 7 équipé d'une poignée 9 et d'un embout 11, une tête 13 fixée sur l'embout, et une pluralité de peignes 15 fixés sur la tête.

La filière 1 est manuelle dans l'exemple représenté. En variante (non représentée), la filière 1 est électrique et portative, c'est-à-dire que le manche 7 est remplacé par une machine électrique (non représentée) adaptée pour entraîner en rotation la tête 13 par rapport à l'embout 11 autour de l'axe D.

Le manche 7 s'étend avantageusement perpendiculairement à l'axe D.

La tête 13 comprend un corps 17, représenté en détail sur les figures 3 à 6, et un bouclier 18 formé par une calotte 19 fixée sur le corps 17, par exemple par vissage. La tête 13 est adaptée, dans un sens qui sera précisé ci-après, au diamètre D1 du tube 5. Avantageusement, la tête 13 est interchangeable, c'est-à-dire qu'elle peut être remplacée par une tête analogue (non représentée) adaptée à un tube analogue au tube 5 et possédant un diamètre différent du diamètre D1. Ainsi, la filière 1 comporte avantageusement une pluralité de têtes interchangeables qui sont choisies en fonction du diamètre du tube à fileter. La tête 13 qui convient est celle qui place les peignes 15 radialement à une distance adéquate pour réaliser le filetage 3.

L'embout 11 est par exemple de forme générale circulaire. L'embout 11 définit une ouverture dans le sens axial, de sorte que le tube 5 soit insérable dans la tête 13.

Le corps 17 comprend une extrémité axiale 23 avantageusement insérable axialement dans l'embout 11, une partie médiane 25 de forme générale circulaire autour de l'axe D, et quatre organes 27A, 27B, 27C, 27D définissant des logements 29A à 29D respectivement pour les peignes 15.

Le bouclier 18 est solidaire du corps 17. Le bouclier 18 forme une surface d'appui 18A externe située à une extrémité axiale de la tête 13 opposée à l'extrémité 23.

La surface d'appui 18A entoure avantageusement l'axe D. La surface d'appui 18A est sensiblement orthogonale à l'axe D, et par exemple annulaire et sensiblement plane.

Les organes 27A à 27D étant analogues les uns aux autres à un détail près, seul l'organe 27A sera décrit en détail ci-après.

L'organe 27A comprend deux protubérances 31, 33 faisant saillie axialement à partir de la partie médiane 25 en direction de la calotte 19. Les protubérances 31, 33 comportent respectivement des parois 35, 37 en vis-à-vis, entre lesquelles le logement 29A s'étend circonférentiellement.

Les parois 35, 37 sont par exemple parallèles à l'axe D et avantageusement parallèles entre elles.

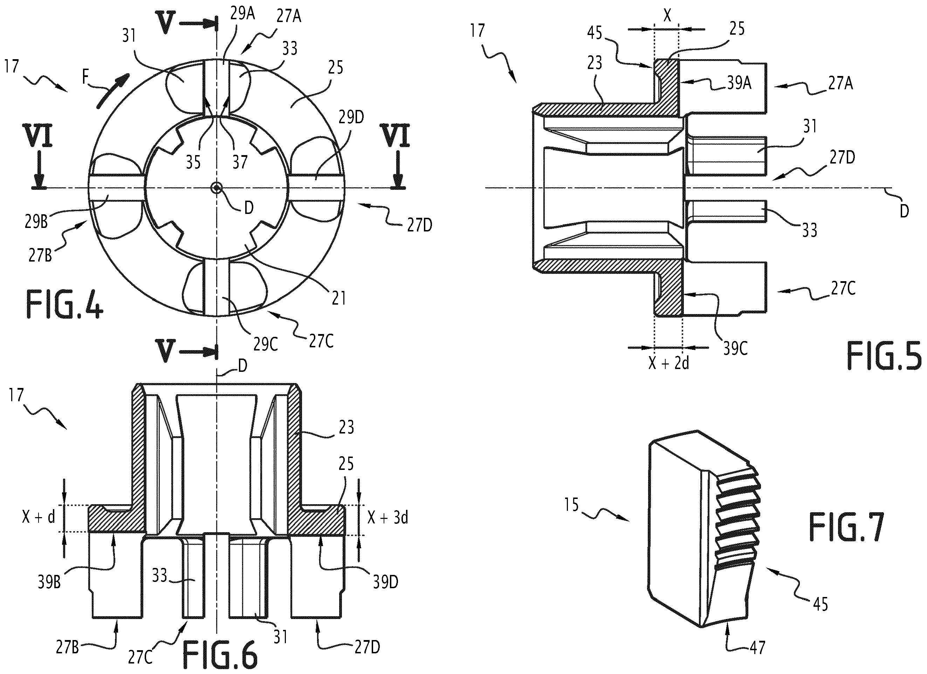

Le logement 29A est défini par les parois 35, 37 et par une surface du butée 39A (figure 5) formée par la partie médiane 25.

La protubérance 31 est avantageusement plus massive que la protubérance 33, car la protubérance 31 accueille par exemple une vis (non représentée) de fixation de la calotte 19 sur le corps 17.

A leurs extrémités, les protubérances 31, 33 comportent respectivement des encoches 41, 43 radialement extérieures et adaptées pour recevoir la calotte 19.

Le logement 29A constitue un passage radial entre les deux protubérances 31, 33. La surface de butée 39A est par exemple sensiblement perpendiculaire à l'axe D.

Par rapport à un rebord 45 de la partie médiane 25, la surface de butée 39A est située axialement à une distance X en direction de la calotte 19, tandis que la surface de butée 39B est située à une distance X+d. La surface de butée 39C est située à une distance X+2d et la surface de butée 39D est située à une distance X+3d. Dit autrement, les surfaces de butée 29A à 29D sont décalées axialement, l'une par rapport à la précédente, d'une même distance d.

Dans l'exemple représenté, la distance d est égale au pas P du filetage 3 divisé par le nombre de peignes 15, c'est-à-dire par quatre.

Les organes 27A à 27D sont répartis régulièrement angulairement autour de l'axe D de manière à former une succession. Les organes 27A à 27D forment successivement entre eux des angles de sensiblement 90° autour de l'axe D. Les organes 27A à 27D se succèdent dans le sens trigonométrique en vue axiale depuis la calotte 19 vers l'embout 11 (figure 4).

Les peignes 15 sont structurellement sensiblement identiques les uns aux autres. On entend par là par exemple que les peignes 15 ont des cotes identiques aux tolérances de fabrication près. Les peignes 15 ne peuvent donc pas être distingués les uns des autres, à l'exception éventuelle d'une marque telle qu'un numéro de fabrication. Les peignes 15 sont parfaitement interchangeables les uns par rapport aux autres dans la filière 1.

Les peignes 15 sont situés axialement du même côté du bouclier 18 que le corps 17.

Comme visible sur la figure 7, chaque peigne 15 présente une forme générale sensiblement parallélépipédique. Chaque peigne 15 comporte une surface dentée 45 tournée vers l'axe D lorsque le peigne est situé dans l'un des logements 29A à 29D dans une position d'usage, et une surface de butée complémentaire 47 adaptée pour buter axialement contre l'une des surfaces de butée 39A à 39D.

La surface dentée 45 comprend avantageusement un biseau situé axialement entre, d'une part, les dents et, d'autre part, la surface de butée complémentaire 47. Un tel biseau facilite l'engagement du tube 5 dans la tête 13.

Les peignes 15 sont adaptés pour être insérés entre les parois 35, 37 des protubérances 31, 33 de chaque organe 27A à 27D. Les peignes 15 sont montés amovibles dans leurs positions d'usage sur le corps 17, et sont fixes par rapport au corps 17 lorsque la calotte 19 est fixée sur le corps 17.

Les peignes 15 forment une succession régulière angulairement autour de l'axe D. Les positions d'usage sont décalées axialement les unes par rapport aux autres comme le sont les logements 29A à 29D.

Dans l'exemple représenté, les peignes 15 sont au nombre de quatre.

Selon des variantes non représentées, la filière 1 comporte N peignes, N étant un nombre supérieur ou égal à deux, et de préférence inférieur ou égal à six.

Lorsqu'il y a N peignes 15, ceux-ci sont avantageusement décalés angulairement l'un par rapport au précédent d'un angle sensiblement égal à 360° divisé par N, et décalés axialement de la distance d. La distance d est avantageusement sensiblement égale au pas P du filetage 3 divisé par N.

Lors de la fabrication de la filière 1, on fixe les peignes 15 sur chacune des têtes 13 dans les positions d'usage. N'importe lequel des peignes 15 peut être placé dans n'importe lequel des logements 29A à 29D, quelle que soit la tête 13 que l'on est en train de monter.

Pour fixer les peignes 15 dans leurs positions d'usage, on fixe la calotte 19 sur le corps 17 après la mise en place des peignes 15 dans les logements 29A à 29D.

Pour monter la filière 1 à tête interchangeable en vue de son utilisation, un opérateur (non représenté) choisit d'abord la tête 13 qui convient, et la fixe ensuite sur l'embout 11. La filière 1 est alors prête à l'usage.

On va maintenant décrire le fonctionnement de la filière 1, c'est-à-dire un procédé selon l'invention.

Pour réaliser le filetage 3 du tube 5, l'opérateur prend en main le manche 7 de la filière 1 dont les peignes 15 ont été montés dans leurs positions d'usage.

Puis, l'opérateur déplace hélicoïdalement la filière 1 par rapport au tube 5 autour de l'axe D, les surfaces dentées 45 des peignes 15 mordant dans le tube pour obtenir le filetage 3. Avantageusement, l'opérateur exerce une pression axiale F1 (figure 1) sur la surface d'appui 18A de façon à amorcer le filetage. Pour ce faire, il place par exemple l'une de ses mains sensiblement à plat sur la surface d'appui 18A.

Le bouclier 18 joue un rôle de protection en empêchant la main de l'opérateur de toucher n'importe lequel des peignes 15 lorsque la main est posée à plat sur la surface d'appui 18A. Ainsi, l'opérateur peut exercer l'effort nécessaire à l'amorçage du filetage.

Grâce aux caractéristiques décrites ci-dessus, un seul type de peigne est fabriqué. Ceci permet de standardiser la fabrication. Lors de la fabrication de la filière 1, le risque de placer les peignes 15 dans une mauvaise position les uns par rapport aux autres n'existe plus, puisque les peignes 15 sont interchangeables. Dès que les peignes 15 sont placés dans les logements 29A à 29D, ils sont automatiquement dans une configuration correcte pour réaliser le filetage 3. Ainsi, la filière 1 est moins chère à fabriquer.

En outre, le bouclier 18 forme la surface d'appui 18A permettant à l'opérateur d'amorcer plus facilement le filetage tout étant protégé des peignes 15.

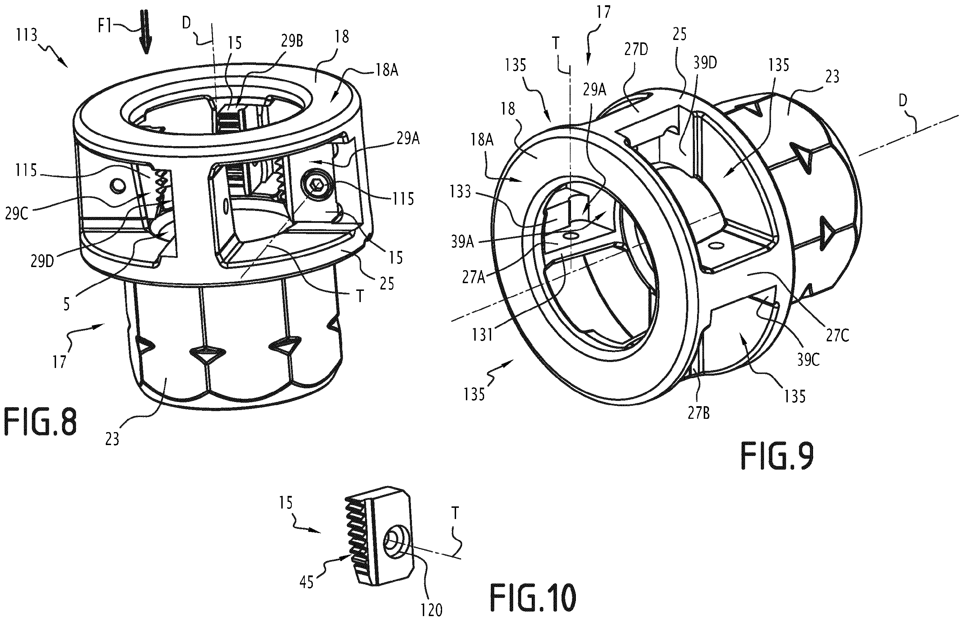

En référence aux figures 8 et 9, on décrit une tête 113 selon un deuxième mode de réalisation de l'invention. La tête 113 est analogue à la tête 13 représentée sur les figures 1 et 3 à 6. Les éléments similaires portent les mêmes références numériques et ne seront pas décrits à nouveau. Seules les différences seront décrites en détail ci-après.

La tête 113 comporte un bouclier 18 venu de matière avec le corps 17.

En variante (non représentée), le bouclier 18 est fixé sur le corps 17.

Le bouclier 18 est par exemple annulaire et sensiblement plan.

Selon une variante non représentée, le bouclier 18 n'entoure pas complètement l'axe D, mais au moins suffisamment pour s'interposer axialement entre la main de l'opérateur et les peignes 15.

Les peignes 15 sont respectivement fixés sur les organes 27A à 27D par une vis 115 (dont l'une seulement est représentée sur la figure 8, les autres s'en déduisant par des rotations de 90° autour de l'axe D).

Chaque vis 115 est par exemple orientée selon une direction T orthoradiale par rapport à l'axe D.

Chaque peigne 15 (figure 10) comporte un alésage 120 adapté pour le passage de l'une des vis 115.

Les organes 27A à 27D s'étendent respectivement entre la partie médiane 25 et le bouclier 18 selon l'axe D. Comme ils sont analogues les uns aux autres, seul l'organe 27A (figure 9) sera décrit ci-après.

L'organe 27A ne comprend pas deux protubérances distinctes, mais deux parois 131, 133 perpendiculaires l'une à l'autre et formant le logement 29A.

La paroi 131 s'étend par exemple sensiblement radialement et reçoit la vis 115.

La paroi 133 se situe par exemple en périphérie du corps 17.

Chaque peigne 15, une fois fixé, est plaqué contre l'une des paroi 131 par l'une des vis 115. Chaque peigne 115 est en outre calé radialement par la paroi 133, et axialement par le bouclier 18, et par l'une des surfaces de butée 39A à 39D décalées axialement.

Le corps 17 définit avantageusement quatre ouvertures latérales 135 permettant de placer respectivement les peignes 115 dans leurs logements 29A à 29D et d'accéder aux vis 115 selon les directions T, par exemple à l'aide d'un tournevis (non représenté).

Pour monter la tête 113, il suffit de fixer les peignes 115 dans leurs logements respectifs à l'aides des vis 115.

La tête 113 s'utilise comme, et présente les mêmes avantages que la tête 13.

## Revendications

1. Filière (1) pour réaliser un filetage (3) sur un tube (5) par un déplacement hélicoïdal de la filière (1) par rapport au tube (5) autour d'un axe (D), la filière (1) comprenant :
- une tête (13 ; 113), et
- une pluralité de peignes (15), chaque peigne (15) possédant une surface dentée (45) propre à mordre dans le tube (5) et étant monté de manière amovible sur un corps (17) de la tête (13 ; 113) dans une position d'usage fixe par rapport à la tête (13 ; 113),
telle que :
- les peignes (15) sont structurellement sensiblement identiques les uns aux autres,
- la tête (13 ; 113) est configurée pour qu'au moins deux des peignes (15) aient des positions d'usage décalées l'une par rapport à l'autre selon l'axe (D),
- la tête (13 ; 113) comprend en outre un bouclier (18) solidaire du corps (17), le bouclier (18) formant une surface d'appui (18A) externe située à une extrémité axiale de la tête (13 ; 113) et entourant au moins partiellement l'axe (D), tous les peignes (15) étant situés axialement du même côté que le corps (17) par rapport à la surface d'appui (18A),
**caractérisée en ce que** le bouclier (18) est de préférence venu de matière avec le corps (17), chaque peigne (15) étant fixé sur le corps (17) respectivement par au moins une vis (115), la tête (113) définissant des ouvertures latérales (135) permettant d'accéder aux vis (115).

2. Filière (1) selon la revendication 1, dans laquelle :
- la tête (13) définit une pluralité de logements (29A, 29B, 29C, 29D) adaptés pour recevoir respectivement les peignes (15) dans les positions d'usage, chaque logement (29A, 29B, 29C, 29D) étant défini au moins en partie par une surface de butée (39A, 39B, 39C, 39D) de la tête (13) propre à buter axialement contre une surface de butée complémentaire (47) d'un des peignes (15), les surfaces de butée (39A, 39B, 39C, 39D) ayant des formes sensiblement identiques les unes aux autres, et au moins deux des surfaces de butée (39A, 39B, 39C, 39D) étant décalées axialement l'une par rapport à l'autre, et
- le bouclier (18) est formé par une calotte (19) fixée sur le corps (17) pour fixer les peignes (15) dans leurs positions d'usage après la mise en place des peignes (15) dans les logements (29A, 29B, 29C, 29D).

3. Filière (1) selon l'une quelconque des revendications 1 à 2, **caractérisée en ce que**, dans leurs positions d'usage, les peignes (15) sont répartis régulièrement angulairement autour de l'axe (D) de manière à former une succession, les peignes (15) étant décalés axialement, l'un par rapport au précédent dans la succession, d'une même distance (d).

4. Filière (1) selon l'une quelconque des revendications 1 à 3, **caractérisée en ce que**, le filetage (3) ayant un pas de filetage (P), les positions d'usage des peignes (15) se déduisent les unes des autres par un déplacement hélicoïdal selon l'axe (D) et ayant un pas égal au pas de filetage (P).

5. Filière (1) selon l'une quelconque des revendications 1 à 4, **caractérisée en ce qu'**elle comporte entre deux et six peignes (15).

6. Filière (1) selon l'une quelconque des revendications 1 à 5, **caractérisée en ce qu'**elle comporte quatre peignes (15).

7. Filière (1) selon l'une quelconque des revendications 1 à 6, **caractérisée en ce que** les surfaces dentées (45) des peignes (15) dans leurs positions d'usage sont tournées vers l'axe (D).

8. Filière (1) selon l'une quelconque des revendications 1 à 7, **caractérisée en ce qu'**elle comprend une pluralité de têtes (13 ; 113) interchangeables, adaptées à différents diamètres (D1) de tube (5).

9. Procédé de réalisation d'un filetage (3) sur un tube (5) comprenant les étapes suivantes :
- fourniture du tube (5),
- fourniture d'une filière (1) selon l'une quelconque des revendications 1 à 8, les peignes (15) étant montés respectivement dans leurs positions d'usage, et
- déplacement hélicoïdal de la filière (1) par rapport au tube (5) autour de l'axe (D), les surfaces dentées (45) mordant dans le tube (5) pour obtenir un tube fileté.

10. Procédé selon la revendication 9, comprenant en outre une étape dans laquelle un opérateur exerce une pression axiale (F1) sur la surface d'appui (18A), la pression axiale étant dirigée vers les peignes (15).

11. Procédé de fabrication d'une filière (1) selon l'une quelconque des revendications 1 à 8, comprenant les étapes suivantes :
- mise en place des peignes (15) dans les positions d'usage, n'importe lequel des peignes (15) pouvant être placé dans n'importe laquelle des positions d'usage, et
- fixation des peignes (15) sur la tête (13 ; 113).

## Patentansprüche

1. Gewindeschneider (1) zum Herstellen eines Gewindes (3) auf einem Rohr (5) durch eine spiralförmige Bewegung des Gewindeschneiders (1) in Bezug auf das Rohr (5) um eine Achse (D) herum, wobei der Gewindeschneider (1) umfasst:
- einen Kopf (13; 113), und
- eine Mehrzahl von Schneidbacken (15), wobei jede Schneidbacke (15) eine gezahnte Fläche (45) besitzt, die geeignet ist, sich in das Rohr (5) einzubeißen und jede Schneidbacke in lösbarer Weise an einem Körper (17) des Kopfes (13; 113) in einer in Bezug auf den Kopf (13; 113) festen Bezugsposition montiert ist, derart, dass
- die Schneidbacken (15) strukturell zueinander im Wesentlichen identisch sind,
- der Kopf (13; 113) derart ausgebildet ist, dass mindestens zwei der Schneidbacken (15) zueinander gemäß der Achse (D) versetzte Benutzungspositionen haben,
- der Kopf (13; 113) außerdem ein mit dem Körper (17) verbundenen Schild (18) umfasst, wobei der Schild (18) eine äußere Abstützfläche (18A) bildet, die an einem axialen Ende des Kopfes (13; 113) liegt und mindestens teilweise die Achse (D) umgibt, wobei alle Schneidbacken (15) axial an der gleichen Seite wie der Körper (17) in Bezug auf die Abstützfläche (18A) liegen,
**dadurch gekennzeichnet, dass** der Schild (18) vorzugsweise einstückig mit dem Körper (17) verbunden ist, jede Schneidbacke (15) an dem Körper (17) jeweils durch mindestens eine Schraube (115) befestigt ist, der Kopf (113) seitliche Öffnungen (135) begrenzt, die einen Zugang zu den Schrauben (115) ermöglicht.

2. Gewindeschneider (1) nach Anspruch 1, bei dem:
- der Kopf (13) eine Mehrzahl von Aufnahmen (29A, 29B, 29C, 29D) begrenzt, die ausgebildet sind, jeweils die Schneidbacken (15) in ihren Benutzungspositionen aufzunehmen, wobei jede Aufnahme (29A, 29B, 29C, 29D) zumindest teilweise durch eine Anschlagfläche (39A, 39B, 39C, 39D) des Kopfes (13) begrenzt ist, die geeignet ist, axial gegen eine komplementäre Anschlagfläche (47) einer der Schneidbacken (15) anzuschlagen, wobei die Anschlagflächen (39A, 39B, 39C, 39D) im Wesentlichen zueinander identische Formen aufweisen und mindestens zwei der Anschlagflächen (39A, 39B, 39C, 39D) axial zueinander versetzt sind, und
- der Schild (18) durch eine Kalotte (19) gebildet wird, die an dem Körper (17) befestigt ist, um die Schneidbacken (15) in ihren Benutzungspositionen nach der Instellungbringung der Schneidbacken (15) in den Aufnahmen (29A, 29B, 29C, 29D) zu befestigen.

3. Gewindeschneider (1) nach einem beliebigen der Ansprüche 1 bis 2, **dadurch gekennzeichnet, dass** die Schneidbacken (15) in ihren Benutzungspositionen winkelmäßig regelmäßig um die Achse (D) verteilt sind, um eine Aufeinanderfolge zu bilden, wobei die Schneidbacken (15) axial jeweils eine zu der vorhergehenden in der Aufeinanderfolge um einen gleichen Abstand (d) versetzt sind.

4. Gewindeschneider (1) nach einem beliebigen der Ansprüche 1 bis 3, **dadurch gekennzeichnet, dass** das Gewinde (6) einen Gewindegang (P) aufweist und die Benutzungspositionen der Schneidbacken (15) sich voneinander durch eine spiralförmige Verschiebung gemäß der Achse (D) herleiten lassen, wobei sie eine Steigung gleich dem Gewindegang des Gewindes (P) aufweisen.

5. Gewindeschneider (1) nach einem beliebigen der Ansprüche 1 bis 4, **dadurch gekennzeichnet, dass** er zwischen zwei und sechs Schneidbacken (15) aufweist.

6. Gewindeschneider (1) nach einem beliebigen der Ansprüche 1 bis 5, **dadurch gekennzeichnet, dass** er vier Schneidbacken (15) aufweist.

7. Gewindeschneider (1) nach einem beliebigen der Ansprüche 1 bis 6, **dadurch gekennzeichnet, dass** die gezahnten Flächen (45) der Schneidbacken (15) in ihren Benutzungspositionen zu der Achse (D) gerichtet sind.

8. Gewindeschneider (1) nach einem beliebigen der Ansprüche 1 bis 7, **dadurch gekennzeichnet, dass** er eine Mehrzahl von auswechselbaren Köpfen (13; 113) umfasst, die an unterschiedliche Rohrdurchmesser (D1) angepasst sind.

9. Verfahren zur Herstellung eines Gewindes (3) auf einem Rohr (5), die folgenden Schritte umfassend:
- Bereitstellen eines Rohrs (5),
- Bereitstellen eines Gewindeschneiders (1) nach einem beliebigen der Ansprüche 1 bis 8, wobei die Schneidbacken (15) jeweils in ihren Benutzungspositionen montiert sind, und
- spiralförmiges Bewegen des Gewindeschneiders (1) in Bezug auf das Rohr (5) um die Achse (D), wobei die gezahnten Flächen (45) sich in das Rohr (5) einbeißen, um ein Rohr mit Gewinde zu erhalten.

10. Verfahren nach Anspruch 9, außerdem einen Schritt umfassend, bei dem eine Bedienperson einen axialen Druck (F1) auf die Abstützfläche (18A) ausübt, wobei der axiale Druck zu den Schneidbacken (15) gerichtet ist.

11. Verfahren zur Herstellung eines Gewindeschneiders (1) nach einem beliebigen der Ansprüche 1 bis 8, die folgenden Schritte umfassend:
- in Stellung Bringen der Schneidbacken (15) in die Benutzungspositionen, wobei eine beliebige der Schneidbacken (15) in eine beliebige der Benutzungspositionen angeordnet werden kann, und
- Befestigen der Schneidbacken (15) an dem Kopf (13; 113).

## Claims

1. Die (1) for producing a thread (3) on a tube (5) by a helicoidal displacement of the die (1) relative to the tube (5) about an axis (D), the die (1) comprising:
- a head (13; 113), and
- a plurality of die stock chasers (15), each die stock chaser (15) having a toothed surface (45) which is able to bite into the tube (5) and being mounted in a moveable manner on a body (17) of the head (13; 113) into a fixed position of use relative to the head (13; 113), such that
- the die stock chasers (15) are structurally substantially identical to each other,
- the head (13; 113) is configured so that at least two of the die stock chasers (15) have positions of use which are offset one relative to the other along the axis (D),
- the head (13; 113) comprises, furthermore, a shield (18) which is integral with the body (17), the shield (18) forming an external support surface (18A) which is situated at an axial end of the head (13; 113) and surrounding the axis (D) at least partially, all the die stock chasers (15) being situated axially on the same side as the body (17) relative to the support surface (18A),
**characterised in that** the shield (18) is preferably made integrally with the body (17), each die stock chaser (15) being fixed on the body (17) respectively by at least one screw (115), the head (113) defining lateral openings (135) allowing access to the screws (115).

2. Die (1) according to claim 1, in which:
- the head (13) defines a plurality of housings (29A, 29B, 29C, 29D) which are adapted to receive respectively the die stock chasers (15) in the positions of use, each housing (29A, 29B, 29C, 29D) being defined at least partly by a stop surface (39A, 39B, 39C, 39D) of the head (13) which is able to abut axially against a complementary stop surface (47) of one of the die stock chasers (15), the stop surfaces (39A, 39B, 39C, 39D) having shapes essentially identical to each other, and at least two of the stop surfaces (39A, 39B, 39C, 39D) being offset axially one relative to the other, and
- the shield (18) is formed by a cap (19) which is fixed on the body (17) in order to fix the die stock chasers (15) in their positions of use after positioning the die stock chasers (15) in the housings (29A, 29B, 29C, 29D).

3. Die (1) according to any of claims 1 to 2, **characterised in that**, in their positions of use, the die stock chasers (15) are distributed regularly angularly about the axis (D) so as to form a sequence, the die stock chasers (15) being offset axially, one relative to the preceding one in the sequence, at an identical spacing (d).

4. Die (1) according to any of claims 1 to 3, **characterised in that**, the thread (3) having a thread pitch (P), the positions of use of the die stock chasers (15) are derived one from the other by a helicoidal displacement along the axis (D) and having a pitch equal to the thread pitch (P).

5. Die (1) according to any of claims 1 to 4, **characterised in that** it comprises between two and six die stock chasers (15).

6. Die (1) according to any of claims 1 to 5, **characterised in that** it comprises four die stock chasers (15).

7. Die (1) according to any of claims 1 to 6, **characterised in that** the toothed surfaces (45) of the die stock chasers (15), in their positions of use, are turned towards the axis (D).

8. Die (1) according to any of claims 1 to 7, **characterised in that** it comprises a plurality of interchangeable heads (13; 113) which are adapted to different diameters (D1) of tube (5).

9. Method for producing a thread (3) on a tube (5) comprising the following steps:
- providing the tube (5),
- providing a die (1) according to any of claims 1 to 8, the die stock chasers (15) being mounted respectively in their positions of use, and
- helicoidal displacement of the die (1) relative to the tube (5) about the axis (D), the toothed surfaces (45) biting into the tube (5) in order to obtain a threaded tube.

10. Method according to claim 9, comprising, furthermore, a step in which an operator exerts an axial pressure (F1) on the support surface (18A), the axial pressure being directed towards the die stock chasers (15).

11. Method for manufacturing a die (1) according to any of claims 1 to 8, comprising the following steps:
- positioning die stock chasers (15) in the positions of use, any of the die stock chasers (15) being able to be placed in any of the positions of use, and
- fixing the die stock chasers (15) on the head (13; 113).
